# EUROPEAN PATENT SPECIFICATION

(11) **EP 4 589 738 B1**
(45) Date of publication and mention of the grant of the patent: **30.09.2026**
(21) Application number: 24218148.5
(22) Date of filing: 06.12.2024
(51) Int. Cl.: H01M 10/653, H01M 10/658, H01M 10/647, H01M 10/6552, H01M 10/6556

(54) **THERMAL PROPAGATION BREAKER AND BATTERY ASSEMBLY INCLUDING SAME**
WÄRMEAUSBREITUNGSBRECHER UND BATTERIEANORDNUNG DAMIT
DISJONCTEUR À PROPAGATION THERMIQUE ET ENSEMBLE BATTERIE LE COMPRENANT

(30) Priority: 19.01.2024 KR 20240008841
(43) Date of publication of application: 23.07.2025
(73) Proprietor: SAMSUNG SDI CO., LTD., Yongin-si, Gyeonggi-do 17084 (KR)
(72) Inventor: Im, Jangyeong, 17084 Yongin-Si, Gyeonggi-do (KR)
(74) Representative: Gulde & Partner

(56) References cited:
- JP-A- 2015 233 017
- JP-A- 2016 178 078
- JP-B2- 5 326 480
- JP-B2- 6 991 839
- US-A1- 2023 395 902

## Description

### BACKGROUND

### 1. Field

Aspects of embodiments of the present disclosure relate to a thermal propagation breaker and a battery assembly including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art. Document JP 5 326480 B2 discloses a relevant a battery assembly and a thermal propagation breaker according to the pre-amble of claims 1 and 13 respectively.

### SUMMARY

A first aspect of the present disclosure relates to a battery assembly, which includes a plurality of battery cells, and a thermal propagation breaker between some battery cells among the plurality of battery cells or on at least one outer battery cell among the plurality of battery cells, the thermal propagation breaker including a frame including bend portions and defining an internal space, the bend portions being bendable in response to an external pressure, and a volume of the internal space being configured to decrease in response to bending of the bend portions, and a melting material filling the internal space, the melting material having a melting point at or above a first threshold temperature.

Preferably, the frame may further include a first plate and a second plate facing the first plate, and the bend portions include a first bend portion connecting respective first ends of the first plate and the second plate, and a second bend portion connecting respective second ends of the first plate and the second plate, and each of the first bend portion and the second bend portion having a bent shape.

Further preferred, the bend portions may further include one or more third bend portions connecting the first plate and the second plate, the one or more third bend portions having a bent shape and being between the first bend portion and the second bend portion.

Preferably, at or above the first threshold temperature, in response to the external pressure applied to the thermal propagation breaker in a direction perpendicular to the first plate and the second plate, the bend portions may be configured to bend and a distance between the first plate and the second plate is configured to decrease.

In one or more embodiments, the frame may include at least one side that is open.

In one or more embodiments, the frame (i.e. the material from which the frame is made) may have a melting point at or above a second threshold temperature, the second threshold temperature being higher than the first threshold temperature.

Preferably, at or above the second threshold temperature, a melting time for the melting material may be shorter than a melting time for the frame.

In one or more embodiments, the first threshold temperature may be between 60 °C and 90 °C.

In one or more embodiments, the melting material may include paraffin or polycaprolactone.

In one or more embodiments, the frame may include a metal or a plastic.

In one or more embodiments, the frame may have a thickness in Y-axis direction of 5 to 10 mm, more preferred 6 to 8 mm. Further, the melting material may have a thickness in Y-axis direction of 3 to 8 mm, more preferred 4 to 7 mm. In these ranges a further thickness reduction of the insulating sheets may be possible.

In one or more embodiments, the battery pack may further include at least one insulating sheet. Preferably, the frame may have a thickness in Y-axis direction of 5 to 10 mm, more preferred 6 to 8 mm and the melting material may have a thickness in Y-axis direction of 3 to 8 mm, more preferred 4 to 7, and the insulating sheet may have a thickness in Y-axis direction of 0.1 to 0.5 mm, more preferred 0.2 to 0.3 mm, even more preferred 0.3 mm or less.

A second aspect of the present disclosure relates to a thermal propagation breaker for a battery assembly. The thermal propagation breaker includes a frame including bend portions and defining an internal space, the bend portions being bendable in response to an external pressure, and a volume of the internal space being configured to decrease in response to bending of the bend portions; and a melting material filling the internal space, the melting material having a melting point at or above a first threshold temperature.

Preferably, the frame may further include a first plate and a second plate facing the first plate, and the bend portions include a first bend portion connecting respective first ends of the first plate and the second plate, and a second bend portion connecting respective second ends of the first plate and the second plate, and each of the first bend portion and the second bend portion having a bent shape.

Further preferred, the bend portions may include one or more third bend portions connecting the first plate and the second plate, the one or more third bend portions having a bent shape and being between the first bend portion and the second bend portion.

Preferably, at or above the first threshold temperature, in response to the external pressure applied to the thermal propagation breaker in a direction perpendicular to the first plate and the second plate, the bend portions may be configured to bend and a distance between the first plate and the second plate is configured to decrease.

In one or more embodiments, the frame may include at least one side that is open.

In one or more embodiments, the frame (i.e. the material from which the frame is made) may have a melting point at or above a second threshold temperature, the second threshold temperature being higher than the first threshold temperature.

Preferably, at or above the second threshold temperature, a melting time for the melting material may be shorter than a melting time for the frame.

In one or more embodiments, the first threshold temperature may be between 60 °C and 90 °C.

In one or more embodiments, the melting material may include paraffin or polycaprolactone.

In one or more embodiments, the frame may include a metal or a plastic.

In one or more embodiments, the frame may have a thickness in Y-axis direction of 5 to 10 mm, more preferred 6 to 8 mm. Further, the melting material may have a thickness in Y-axis direction of 3 to 8 mm, more preferred 4 to 7.

A thermal propagation breaker according to one or more embodiments may include a frame configured to include bend portions and defining an internal space and a melting material configured to fill the internal space defined by the frame, and melting at or above a first threshold temperature, wherein at or above the first threshold temperature, in response to external pressure being applied to the thermal propagation breaker, the bend portions may be bent and the volume of the internal space may be reduced.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of a battery cell according to embodiments of the present disclosure.
FIG. 2 illustrates a perspective view showing an example of a battery module according to embodiments of the present disclosure.
FIGS. 3A and 3B illustrate an example of a battery pack according to embodiments of the present disclosure.
FIG. 4 illustrates a plan diagram showing an example including a portion of the battery pack according to embodiments of the present disclosure.
FIG. 5 illustrates an enlarged, detailed diagram of part P of FIG. 4.
FIG. 6 illustrates an enlarged, detailed diagram of part Q of FIG. 4.
FIGS. 7 and 8 illustrate perspective and plan diagrams showing an example of the thermal propagation breaker according to embodiments of the present disclosure.
FIG. 9 illustrates a plan diagram showing an example of a molten state of a melting material of the thermal propagation breaker according to embodiments of the present disclosure.
FIGS. 10 and 11 illustrate perspective and plan diagrams showing an example of a thermal propagation breaker according to embodiments of the present disclosure.
FIG. 12 illustrates a plan diagram showing a molten state of a melting material of the thermal propagation breaker according to embodiments of the present disclosure.
FIG. 13 illustrates a perspective diagram showing an example of a method of manufacturing a thermal propagation breaker according to embodiments of the present disclosure.
FIG. 14 illustrates a plan diagram showing an example of a method of manufacturing a thermal propagation breaker according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Throughout the specification, a battery assembly is used as a structure including a plurality of battery cells and is intended to encompass a battery pack or a battery module.

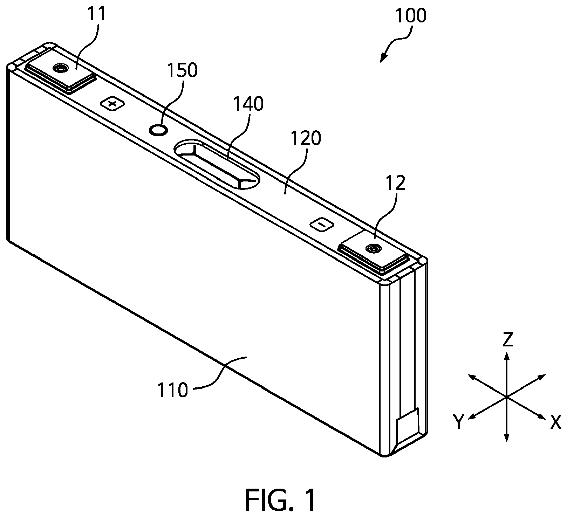

FIG. 1 illustrates a perspective view showing an example of a battery cell 100 according to embodiments of the present disclosure. Referring to FIG. 1, the battery cell 100 may include an electrode assembly including electrodes (e.g., at least one wound or laminated electrode assembly with a separator (i.e., an insulator) provided between a positive electrode and a negative electrode), a case 110 in which the electrode assembly is contained, and a cap plate 120 coupled to an opening in the case 110. The battery cell 100 shown in FIG. 1 may be a type of secondary cell.

Each of the positive electrode and the negative electrode in the electrode assembly may include a current collector made of a thin metal foil having a coated portion on which an active material is coated and an uncoated portion on which an active material is not coated. The positive electrode and the negative electrode are wound after interposing the separator, which is an insulator, therebetween. However, the electrode assembly may have a structure in which a positive electrode and a negative electrode, each made of a plurality of sheets, are alternately stacked with a separator interposed therebetween. In addition, the electrode assembly may have any structure containing electrodes.

The case 110 may form the overall contour of the battery cell 100, and may be formed of a conductive metal, e.g., aluminum (Al), an Al alloy, or nickel (Ni)-plated steel. Further, the case 110 may provide a space in which the electrode assembly is housed. In FIG. 1, the case 110 is shown as a prismatic case and the battery cell 100 is shown as a prismatic battery cell, but the battery cell 100 may be a battery cell having any suitable shape, e.g., a prismatic shape, a cylindrical shape, or a pouch shape.

The cap plate 120 may be coupled to the opening of the case 110 to seal the case 110. The case 110 and the cap plate 120 may be formed of a conductive material. In an embodiment, the top end of the case 110 may be open, and the cap plate 120 may seal the open top end of the case 110.

A positive terminal part 11 electrically connected to a negative electrode and a negative terminal part 12 electrically connected to a positive electrode may be coupled to the cap plate 120. For example, the positive and negative terminals parts 11 and 12 may be positioned to protrude outwardly through the cap plate 120. The positions of the positive and negative terminals parts 11 and 12 may be changed.

According to an embodiment, a vent 140 may be formed on at least one side of the battery cell 100 (e.g., the top side of the battery cell 100 ( i.e., in the cap plate 120) in the shown example). The vent 140 may be configured to open in a case where an internal pressure above a predetermined threshold pressure is detected in the battery cell 100.

In this case, the threshold pressure may be set differently depending on the application, material, purpose, etc. of the battery. In an example, a relatively high threshold pressure may be set for a battery having a short charge-discharge cycle in use in which the internal pressure of the case 110 is maintained at a higher pressure on average compared to other applications. In another example, a relatively high threshold pressure may be set for a battery formed of a material and/or upp9manufactured in a design having relatively high heat and/or pressure resistance. In a different example, a relatively low threshold pressure may be set for a battery formed of a material and/or manufactured in a design having relatively low heat and/or pressure resistance. In addition or in another example, the vent 140 may be configured to open in a case where the internal temperature exceeds a predetermined threshold temperature. With this configuration, the vent 140 may prevent explosion of the battery cell 100 or prevent a chain exothermic reaction of other battery cells arranged around the battery cell 100.

In an embodiment, the cap plate 120 may include an electrolyte inlet 150. For example, the electrolyte inlet 150 may be a through-hole provided in the cap plate 120, and may be formed such that electrolyte is injected into the case 110 through the electrolyte inlet 150 after the cap plate 120 is coupled and sealed to an opening in the case 110. The electrolyte inlet 150 may be sealed with a sealing member after the electrolyte is injected.

The battery cell 100 may be a lithium (Li) battery cell, a sodium (Na) battery cell, or the like. However, the battery cell 100 may include any battery capable of repeatedly providing electricity by being charged and discharged. In an embodiment in which the battery cell 100 is a Li battery cell, the battery cell 100 may be used in an electric vehicle (EV) due to superior lifetime characteristics and superior high rate characteristics. For example, the battery cell 100 may be used in a hybrid vehicle such as a plug-in hybrid electric vehicle (PHEV). In addition, the Li battery cell may be used in a field in which a large amount of power storage is used. For example, the Li battery cell may be used in electric bicycles, power tools, and the like.

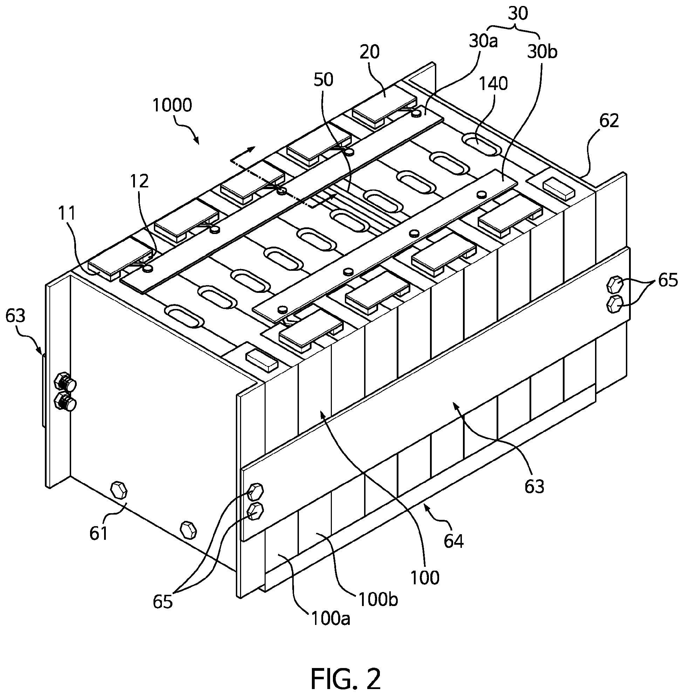

FIG. 2 illustrates a perspective view showing an example of a battery module 1000 according to embodiments of the present disclosure.

The battery pack and the battery module will be described below as different concepts, but the present disclosure is not limited thereto. The thermal propagation breaker according to the present disclosure can be used in the battery pack or the battery module. Furthermore, a battery assembly including the thermal propagation breaker according to the present disclosure is a concept encompassing both a battery pack or a battery module including a plurality of battery cells, and includes, e.g., a pack structure that directly forms a battery pack from battery cells.

Referring to FIG. 2, the battery module 1000 according to one or more embodiments of the present disclosure may include the terminal parts 11 and 12, a plurality of the battery cells 100 arranged in one direction, a connection tab 20 connecting a battery cell 100a to an adjacent battery cell 100b, and a protection circuit module 30 having one end connected to the connection tab 20. The protection circuit module 30 may include a battery management system (BMS). Further, the connection tab 20 may include a body portion in contact with the terminal parts 11 and 12 between the adjacent battery cells 100a and 100b and an extension portion extending from the body portion and connected to the protection circuit module 30. The connection tab 20 may be, e.g., a bus bar.

Each battery cell 100 may include a battery case, an electrode assembly received (or accommodated) in the battery case, and an electrolyte. The electrode assembly and the electrolyte react electrochemically to store and release (e.g., generate) energy. The terminal parts 11 and 12 may be electrically connected to the connection tab 20, and the vent 140, as a discharge passage for gas generated inside the battery case, may be provided on one side of (e.g., an upper side of) the battery cell 100. The terminal parts 11 and 12 of the battery cell 100 may be the positive terminal part 11 and the negative terminal part 12 having different polarities from each other, and the positive and negative terminal parts 11 and 12 of the adjacent battery cells 100a and 100b may be electrically connected to each other in series or parallel by the connection tab 20, to be described in more detail below. Although a serial connection has been described as an example, various connection structures may be employed as desired or necessary. In addition, the number and arrangement of battery cells 100 is not limited to the structure shown in FIG. 2 and may be changed as desired or necessary. According to an embodiment, the battery module 1000 may include one or more thermal propagation breakers according to embodiments of the present disclosure.

The plurality of battery cells 100 may be arranged in (e.g., may be stacked in) one direction so that the wide surfaces of the battery cells 100 face each other, and the plurality of battery cells 100 may be fixed by the housings 61, 62, 63, and 64. The housings 61, 62, 63, and 64 may include a pair of end plates 61 and 62 facing the wide surfaces of the battery cell 100 and a side plate 63 and a bottom plate 64 connecting the pair of end plates 61 and 62 to each other. The side plate 63 may support side surfaces of the battery cells 100, and the bottom plate 64 may support bottom surfaces of the battery cells 100. In addition, the pair of end plates 61 and 62, the side plate 63, and the bottom plate 64 may be connected by bolts 65 and/or any other suitable fastening members and methods known to those of ordinary skill in the art.

The protection circuit module 30 may have electronic components and protection circuits mounted thereon and may be electrically connected to the connection tabs 20, to be described in more detail later. The protection circuit module 30 includes a first protection circuit module 30a and a second protection circuit module 30b extending along the direction in which the plurality of battery cells 100 are arranged in different locations. The first protection circuit module 30a and the second protection circuit module 30b may be spaced from each other at a suitable interval (e.g., a predetermined interval) and arranged parallel to each other to be electrically connected to adjacent connection tabs 20, respectively. For example, the first protection circuit module 30a extends on one side of the upper portion of the plurality of battery cells 100 along the direction in which the plurality of battery cells 100 are arranged, and the second protection circuit module 30b extends on the other upper side of the plurality of battery cells 100 along the direction in which the plurality of battery cells 100 are arranged. The second protection circuit module 30b may be spaced from the first protection circuit module 30a at a suitable interval (e.g., a predetermined interval) with the vents 140 interposed therebetween, and may be disposed parallel to the first protection circuit module 30a. As such, the two protection circuit modules are spaced from each other side-by-side along the direction in which the plurality of battery cells 100 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connection member 50 may be, e.g., an electric wire. In addition, the connection member 50 may be made of a material having elasticity or flexibility. By the connection member 50, it may be possible to check and manage whether the voltage, temperature, and/or current of the plurality of battery cells 100 are normal. For example, the information received by the first protection circuit module 30a from connection tabs adjacent to the first protection circuit module 30a, such as voltage, current, and/or temperature, and the information received from connection tabs adjacent to the second protection circuit module 30b, such as voltage, current, and/or temperature, may be integrated and managed by the protection circuit module through the connection member 50.

In addition, when the battery cell 100 swells, shocks may be absorbed by the elasticity or flexibility of the connection member 50, thereby preventing the first and second protection circuit modules 30a and 30b from being damaged.

As described above, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work if (or when) an abnormality is detected in the battery module.

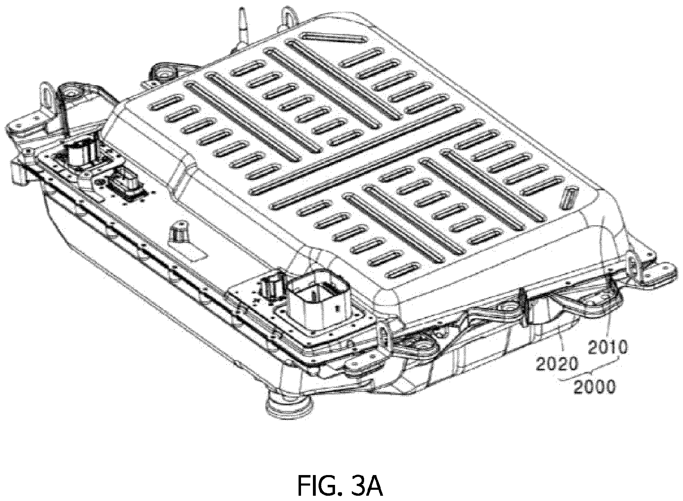

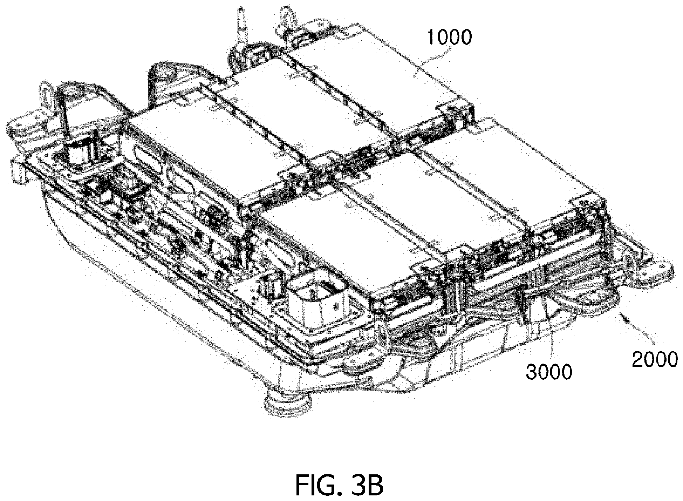

FIGS. 3A and 3B illustrate an example of a battery pack according to embodiments of the present disclosure.

Referring to FIGS. 3A and 3B, the battery pack may include a plurality of battery modules 1000 and a housing 2000 for accommodating the plurality of battery modules 1000. For example, the housing 2000 may include first and second housings 2100 and 2200 coupled in opposite directions through the plurality of battery modules 1000.

According to an embodiment, in a battery pack, a single cell stack may form a single module 1000 in place of battery modules. The single cell stack may include a plurality of battery cells. In the cell stack, the plurality of battery cells may be arranged in a single direction with the wide sides thereof facing each other. In an embodiment, each of the battery cells may have a vent on the top side. For example, each of the battery cells may be the battery cell 100 shown in FIG. 1. The number and arrangement of the cell stacks and the battery cells are not limited to the structure shown in FIGS. 3A and 3B, and may be modified as desired. According to an embodiment, the battery pack may include one or more thermal propagation breakers according to embodiments of the present disclosure.

The plurality of battery modules 1000 or cell stacks may be electrically connected to each other using bus bars 3000, and the plurality of battery modules 1000 may be electrically connected to each other in a series/parallel manner or in a mixed series/parallel manner to achieve desired electrical output.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, overcurrent protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

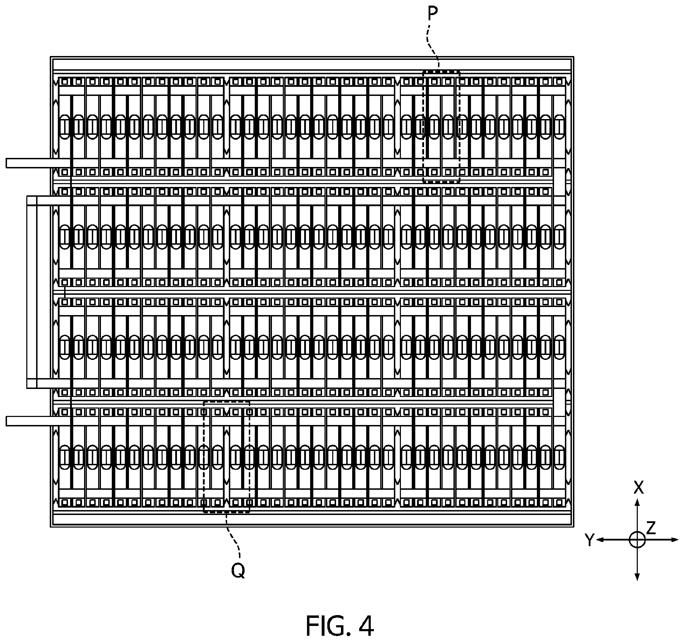

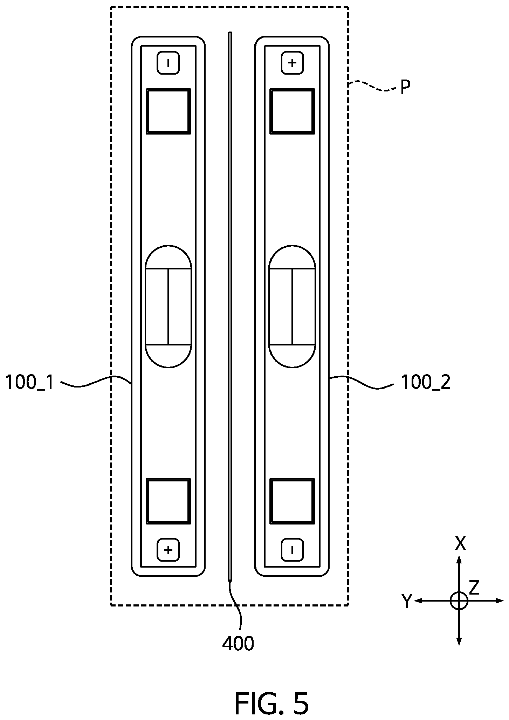

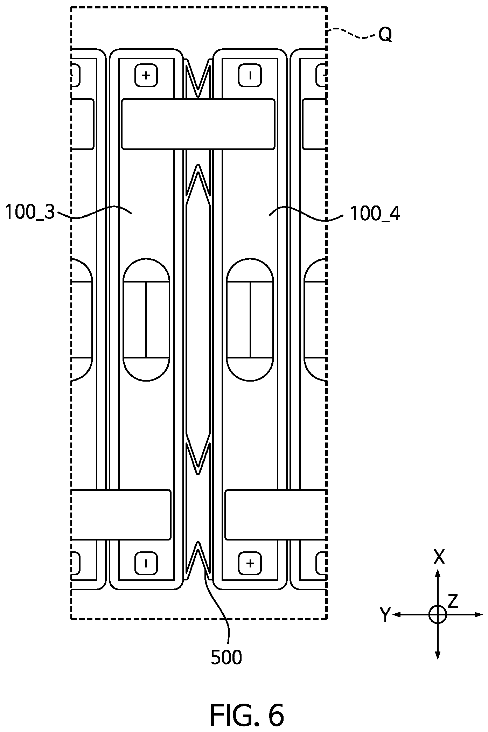

FIG. 4 illustrates a plan diagram showing an example including a portion of a battery pack according to embodiments of the present disclosure. FIG. 5 illustrates an enlarged diagram of part P of FIG. 4, and FIG. 6 illustrates an enlarged diagram of part Q of FIG. 4. According to an embodiment, the battery pack may include an insulating sheet 400 and/or a thermal propagation breaker 500.

Referring to FIGS. 4 and 5, the battery pack may include an insulating sheet 400. The insulating sheet 400 may be positioned between adjacent battery cells 100_1 and 100_2. For example, the insulating sheet 400 may be provided between the wide faces of the two adjacent battery cells 100_1 and 100_2.

The insulating sheet 400 may include at least one of a flame retardant material or a non-combustible material to prevent fire from propagating or an insulating material to prevent heat from propagating. For example, the insulating sheet 400 may include mica, aerogel, or the like to block heat propagation between the two adjacent battery cells 100_1 and 100_2. The insulating sheet 400 may have a structure in which a plurality of layers of mica, aerogel, or the like are stacked on each other. In addition, the insulating sheet 400 may prevent adjacent battery cells from contacting each other between the battery cells, thereby maintaining electrical independence of the battery cells.

Referring to FIG. 4 and 6, the battery pack may include a thermal propagation breaker 500. The thermal propagation breaker 500 may be positioned between adjacent battery cells 100_3 and 100_4, e.g., the thermal propagation breaker 500 may continuously extend along an entire length of each of the adjacent battery cells 100_3 and 100_4 in the X-axis direction. For example, the thermal propagation breaker 500 may be provided between the wide sides of the two adjacent battery cells 100_3 and 100_4, e.g., between facing wide faces of the two adjacent battery cells 100_1 and 100_2. In a case where the thermal propagation breaker 500 is positioned between the adjacent battery cells 100_3 and 100_4, the insulating sheet 400 may not be positioned between those battery cells 100_3 and 100_4.

For example, the thermal propagation breaker 500 may be positioned outside of a cell stack (i.e., outside a plurality of battery cells). For example, the thermal propagation breaker 500 may be positioned between an outermost battery cell of the cell stack and a pack housing.

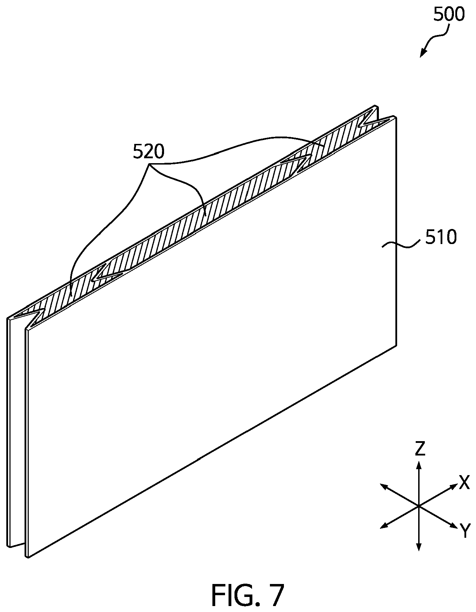

According to an embodiment, the thermal propagation breaker 500 may include a frame including bend portions and defining internal spaces, and a melt filling the internal spaces defined by the frame. The thermal propagation breaker 500 may be configured to reduce the volumes of the internal spaces during an abnormal operating condition, also known as a thermal runaway or a thermal event. As the volumes of the internal spaces of the thermal propagation breaker 500 decrease, the distances between the battery cells may increase, thereby delaying the time for heat propagation. The thermal propagation breaker 500 will be described in more detail below with reference to FIGS. 7 to 14.

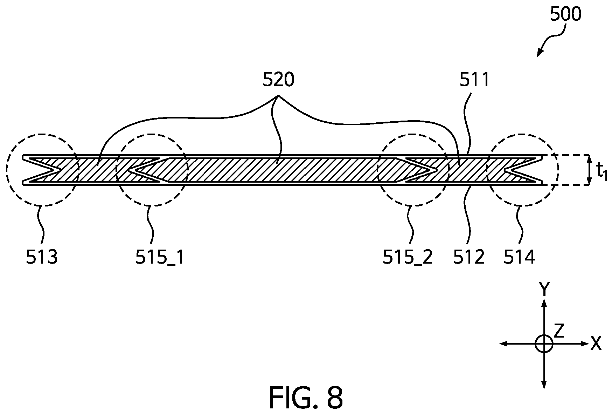

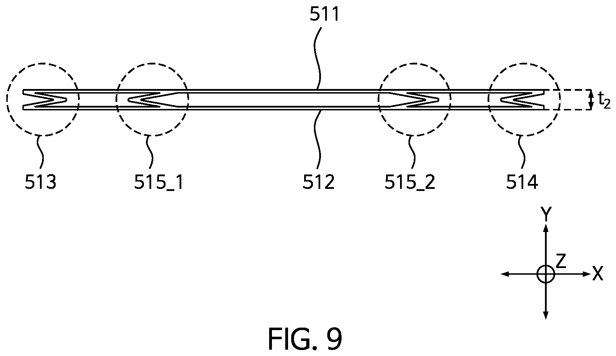

FIGS. 7 and 8 illustrate perspective and plan diagrams showing an example of the thermal propagation breaker 500 according to embodiments of the present disclosure, and FIG. 9 illustrates a plan diagram showing an example of a molten state of a melting material 520 of the thermal propagation breaker 500 according to embodiments of the present disclosure.

Referring to FIG. 7 and 8, the thermal propagation breaker 500 may include a frame 510 including bend portions 513, 514, and 515 and defining internal spaces, and the melting material 520 filling the internal spaces defined by the frame 510.

According to an embodiment, the melting material may 520, 620 be a thermoplastic material with a melting point between 60°C and 90 °C.

According to an embodiment, the shape of the frame 510 may be approximately similar to a shape of a case of a battery cell, but at least one side of the frame 510 may be open. In addition, the frame 510 may include the bend portions 513, 514, and 515, each having a bent shape. The bend portions 513, 514, and 515 may have a curved shape, a bent shape, or a combination thereof. In other words, the bend portions 513, 514, and 515 may have a curved shape with a smooth curved surface, a bent shape with a predetermined angle, or a combination thereof. According to an embodiment, the frame 510 may include (e.g., may be formed of) at least one of a flame retardant material or a non-combustible material to prevent fire from propagating or an insulating material to prevent heat from propagating. In an embodiment, the frame 510 may include (e.g., may be formed of) a metal or a plastic material. In a case where the frame 510 includes a metal material, an insulating material may further be used in at least one side of the frame 510.

For example, the frame 510 may include two plates 511 and 512 facing each other, and may include the bend portions 513, 514, and 515 connecting the two plates and having a bent shape. For example, referring to FIGS. 7 and 8, the bend portions 513, 514, and 515 may extend continuously along an entire height of the frame 510 in the Z-axis direction.

For example, referring to FIG. 8, the frame 510 may include the first plate 511, the second plate 512 facing the first plate 511, the first bend portion 513 connecting a first end of the first plate 511 and a first end of the second plate 512, and the second bend portion 514 connecting a second end of the first plate 511 and a second end of the second plate 512. The first plate 511 and the second plate 512 of the frame 510 may have a size (e.g., length and height in respective X-axis and Z-axis directions) and shape approximately similar to a wide side of the battery cell. In the example shown, the first bend portion 513 and the second bend portion 514 may be at respective opposite outer ends of the frame 510, and may be bent inwardly (e.g., toward the center of the interior of the frame 510) from both outer ends of the frame 510 (e.g., bent toward each other). For example, referring to FIG. 8, each of the first bend portion 513 and the second bend portion 514 may have a V-shape in a top view, and the vertices of the V-shapes may be oriented toward each other. For example, the top and bottom portions of the frame 510 may be open (e.g., the first and second plates 511 and 512 with the first and second bend portions 513 and 514 may define a four-surface frame with open top and bottom portions).

According to an embodiment, the frame 510 may further include one or more third bend portions 515. For example, as shown in FIGS. 7-8, the frame 510 may further include a first third bend portion 515_1 and a second third bend portion 515_2 connecting the first plate 511 and the second plate 512. For example, the first and second third bend portions 515_1 and 515_2 may be formed between the first bend portion 513 and the second bend portion 514, may be spaced apart from each other in the X-axis direction, and may extend continuously along an entire height of the frame 510 in the Z-axis direction.

For example, the third bend portions 515 may have the shape of a bent column connecting central portions of the first plate 511 and central portions of the second plate 512. Here, the central portions may refer to any portions between the outer opposite ends. For example, the third bend portions 515 may be formed at points between 10% and 90% of the length of first plate 511 and the second plate 512 in the X-axis direction of FIGS. 7 and 8. For example, the first third bend portion 515_1 may be a bent column connecting a point between 20% and 40% of the length of first plate 511 and a point between 20% and 40% of the length of second plate 512, and the second third bend portion 515_2 may be a bent column connecting a point between 60% and 80% of the length of first plate 511 and a point between 60% and 80% of the length of second plate 512. In another example, the first third bend portion 515_1 may be a bent column connecting a point between 25% and 35% of the length of the first plate 511 and a point between 25% and 35% of the length of the second plate 512, and the second third bend portion 515_2 may be a bent column connecting a point between 65% and 75% of the length of the first plate 511 and a point between 65% and 75% of the length of the second plate 512. In the example shown, the two third bend portions 515_1 and 515_2 are shown in an outwardly bent configuration (e.g., away from the center of the interior of the frame 510), but the third bend portions 515 may be implemented in various numbers and configurations.

The first and second third bend portions 515_1 and 515_2 may divide the interior space of the frame 510 (i.e., a space defined by the first and second plates 511 and 512 and the first and second bend portions 513 and 514) into multiple internal spaces separated from each other. The internal spaces defined in the frame 510 may be filled with the melting material 520. The melting material 520 may include a phase-change material that undergoes a phase transition from a solid state to a liquid state at a predetermined threshold temperature. For example, the melting material 520 may include a material that melts at a temperature between 60 °C and 90 °C. For example, the melting material 520 may include paraffin or polycaprolactone (PCL). According to an embodiment, the melting material 520 may include at least one of a flame retardant material, a nonflammable material, or an insulating material.

The melting material 520 exists in a solid state in a case where the battery is in a normal state, and may fill the internal spaces defined by the frame 510. Accordingly, during the normal state of the battery, the thermal propagation breaker 500 may support the battery cells to increase the strength of the battery assembly. In addition or in another example, in a case where the melting material 520 includes at least one of a flame retardant material, a non-combustible material, or an insulating material, the melting material may perform functions such as thermal insulation, flame resistance, and electrical isolation. In the case of a thermal event in the battery, the melting material 520 may melt, and the molten material may flow out through the open top and/or bottom sides of the frame 510. This will be described in more detail in the following description with reference to FIG. 9.

According to an embodiment, the frame 510 and the melting material 520 may melt at different temperatures. For example, the melting material 520 may melt at or above a first threshold temperature, and the frame 510 may melt at or above a second threshold temperature. In an embodiment, the frame 510 may melt at a higher temperature than the melting material 520. For example, the second critical temperature at which the frame 510 starts to melt may be higher than the first critical temperature at which the melting material 520 starts to melt. For example, the first threshold temperature may be between 60 °C and 90 °C, and the second threshold temperature may be higher than 90 °C. In an embodiment, the frame 510 may take more time to melt than the melting material 520. For example, at a temperature equal to or higher than the second threshold temperature, the melting time of the melting material 520 may be less than the melting time of the frame 510. According to an embodiment, in an abnormal operating condition, also known as a thermal runaway or a thermal event, the melting material 520 may melt in a case where the temperature of the melting material 520 is higher than a predetermined threshold temperature. The molten material may flow out through an open side of the frame 510 to the outside.

As the thermal propagation breaker 500 having the molten melting material 520 acts as an air gap, the volumes of the internal spaces of the frame 510 without the molten melting material 520 (e.g., reduced amount of molten melting material 520 due to molten material flowing out as a result of a thermal event) may be regulated. For example, in the case of a thermal event, the bend portions 513, 514, and 515 of the frame 510 may be folded or compressed due to swelling of the battery cell or the like. As the volumes of the internal spaces of the frame 510 decrease (e.g., contract or shrink due to folding of the bend portions and resultant reduced amount of melting material), a space capable of accommodating the increased volume of the battery cell due to the swelling may be obtained. The internal spaces of the frame 510 may also serve to delay a heat propagation time in the case of a thermal event.

For example, as shown in FIG. 9, the melting material 520 may melt as the thermal event occurs. In addition, due to swelling of the battery cell or the like, external pressure may be applied inwardly to the thermal propagation breaker 500 in a direction perpendicular to the first plate 511 and the second plate 512 of the frame 510 (e.g., in the Y-axis direction of FIGS. 7 to 9). Based on this, the first to third bend portions 513, 514, and 515 may be folded or compressed, and the molten material may flow out through the open top and/or bottom sides of the frame 510. Accordingly, the distance between the first plate 511 and the second plate 512 may be decreased. For example, as shown, the distance between the first plate 511 and the second plate 512 may be reduced from t₁ (thickness in the Y-axis direction before the thermal event) to t₂ (thickness in the Y-axis direction after the thermal occurs and the bend portions 513, 514, and 515 are folded), where t₁>t₂. Here, t₁ and t₂ refer to the shortest distances between the first plate 511 and the second plate 512 before and after the compression of the frame 510, respectively. As the distance between the first plate 511 and the second plate 512 decreases, the gap between the battery cells may increase (e.g., an air gap may be created and/or increased as the thickness of the frame 510 is reduced and a space between the battery cells accommodating an increased volume of a battery cell due to swelling increases), thereby delaying the time for heat propagation. Finally, heat and/or fire generated inside the battery pack may not escape outside the battery pack.

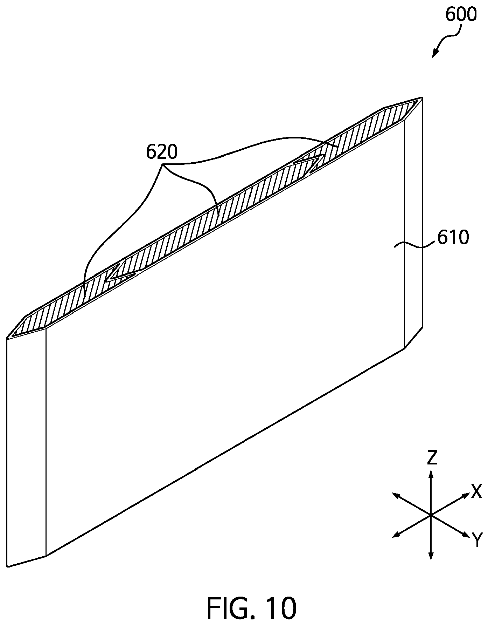

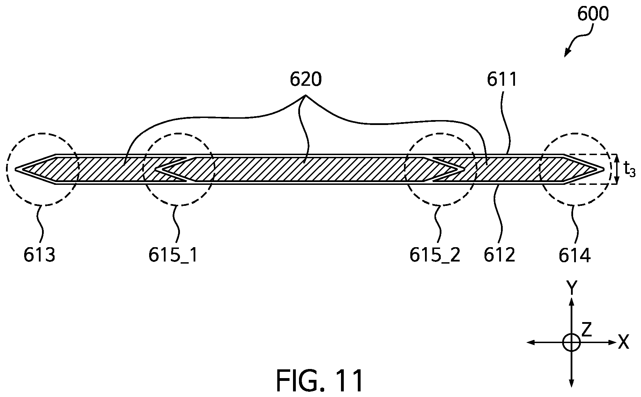

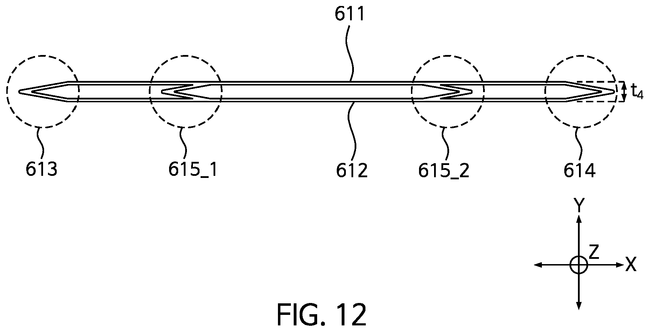

FIGS. 10 and 11 illustrate perspective and plan diagrams showing an example of a thermal propagation breaker 600 according to embodiments of the present disclosure, and FIG. 12 illustrates a plan diagram showing a molten state of melting material 620 of the thermal propagation breaker 600 according to embodiments of the present disclosure. Most of the description of the thermal propagation breaker 500 described above with reference to FIGS. 7 to 9 may be equally/similarly applied to the thermal propagation breaker 600 of FIGS. 10 to 12. Accordingly, in the following description of FIGS. 10 to 12, the description described above with reference to FIGS. 7 to 9 will be omitted or only briefly described, and the following description will focus on the changed configuration.

Referring to FIG. 10 and 11, the thermal propagation breaker 600 may include a frame 610 including bend portions 613, 614, and 615 and defining internal spaces, and may include the melting material 620 filling the internal spaces defined by the frame 610. For example, the frame 610 may include two plates 611 and 612 facing each other, and may include the bend portions 613, 614, and 615 connecting the two plates and having a bent shape. For example, as shown, the frame 610 may include the first plate 611, the second plate 612 facing the first plate 611, the first bend portion 613 connecting a first end of the first plate 611 and a first end of the second plate 612 and bent in an outward direction, and the second bend portion 614 connecting a second end of the first plate 611 and a second end of the second plate 612 and bent in an outward direction (e.g., away from the center of the interior of the frame 610).

According to an embodiment, the frame 610 may further include one or more third bend portions 615. For example, as shown, the frame 610 may further include a first third bend portion 615_1 and a second third bend portion 615_2 connecting the first plate 611 and the second plate 612, formed between the first bend portion 613 and the second bend portion 614, and bent in outward directions.

The melting material injected into the plurality of internal spaces of the frame defined by the plurality of bend portions may have different melting temperatures. For example, the melting material injected into the first internal space (e.g., the melting material positioned at the center of the frame 610) may melt at or may be above a first threshold temperature of the frame 610, and the melting material injected into the second internal spaces (e.g., the melting material positioned on edges of the frame 610) may melt at or may be above a second threshold temperature of the frame 610. The first threshold temperature and the second threshold temperature of the frame 610 may be different from each other. For example, the first critical temperature may be higher than the second critical temperature. In addition, the first threshold temperature and the second threshold temperature of the frame 610 may be lower than the second threshold temperature of the frame 510.

The examples of the thermal propagation breakers 500 and 600 according to some embodiments of the present disclosure are shown in FIG. 7 to 12, but the thermal propagation breakers according to embodiments may be adjusted according to convenience and design. For example, the at least one bend portion of the frame may be bent/curved in an inward/outward direction from an end of the frame. In another example, the bend portions may be provided on the top/bottom ends of the frame of the thermal propagation breaker, and both sides of the frame may be open.

According to an embodiment, the thermal propagation breaker 600 may be configured to reduce the volumes of the internal spaces of the frame 610 during an abnormal operating condition, also known as a thermal runaway or a thermal event. For example, as shown in FIG. 12, the melting material 620 may melt as a thermal event occurs. In addition, due to swelling of the battery cell, external pressure may be applied to the thermal propagation breaker 600 in a direction perpendicular to the first plate 611 and the second plate 612 of the frame 610 (e.g., in the Y-axis direction of FIGS. 10 to 12). Based on this, the first to third bend portions 613, 614, and 615 may be folded, and the molten material may flow out through the open top and/or bottom sides of the frame 610. Accordingly, the distance between the first plate 611 and the second plate 612 may be decreased. For example, as shown, the distance between the first plate 611 and the second plate 612 may be t₃ before the thermal event and, after the thermal event occurs and the bend portions 613, 614, and 615 are folded, may decrease to t₄ (where t₃>t₄). Here, t₃ and t₄ refer to the shortest distances between the first plate 611 and the second plate 612 before and after the compression of the frame 610, respectively. As the distance between the first plate 611 and the second plate 612 decreases, the gap (e.g., an air gap may be created and/or increased as the thickness of the frame 510 is reduced and a space between the battery cells accommodating an increased volume of a battery cell due to swelling increases) between the battery cells may increase, thereby delaying the time for heat propagation. Finally, heat and/or fire generated inside the battery pack may not escape outside the battery pack.

Table 1 below illustrates an example of experimental results in which a heater block was heated until the temperature of a first part of the heater block reached 400 °C and the maximum temperature of a second part of an adjacent block, i.e., a cell block placed adjacent to the heater block, was recorded.

**[Table 1]**

| | Highest Temp of Adjacent Block (°C) | Temperature Ratio to Reference |
|---|---|---|
| Comp. Ex. 1 | 304 | 100% (Reference) |
| Comp. Ex. 2 | 242 | 80% |
| Ex. 1 | 178 | 59% |
| Ex. 2 | 141 | 46% |

In Table 1 above, Comparative Example 1 is an example where neither an insulating sheet nor an air gap was provided between two cell blocks, Comparative Example 2 is an example where an insulating sheet having a thickness of 0.3 mm was provided between two cell blocks, Example 1 is an example where an air gap having a thickness of 0.3 mm was provided between two cell blocks, and Example 2 is an example where an air gap having a thickness of 0.6 mm was provided between the two cell blocks. Referring to Table 1, in Comparative Example 2 having the 0.3 mm thick insulating sheet provided between the two cell blocks, the highest temperature was reduced by 62 °C compared to Comparative Example 1. In addition, in Examples 1 and 2, the highest temperatures were reduced by 126 °C and 163 °C, respectively, compared to Comparative Example 1, and the highest temperatures were reduced by 64 °C and 101 °C, respectively, compared to Comparative Example 2.

From the above experimental results, it can be seen that a thermal propagation blocking performance was better in a case where the air gap was applied between adjacent blocks than in a case where the insulating sheet was applied between adjacent blocks. In other words, it can be seen that an air gap between battery cells is very important to prevent heat dissipation.

In general, in a battery pack, insulating sheets are desirably applied between all battery cells for thermal insulation and electrical isolation, and especially for high capacity batteries, thicker insulating sheets are applied to block thermal propagation. In the case of a battery pack including the thermal propagation breaker of the present disclosure, because the thermal propagation delaying/blocking effect occurs due to the gaps (e.g., air gaps) between the cells in the case of a thermal event, the thickness of each thermal insulating sheet positioned between battery cells may be reduced. As a result, a safe battery having high energy density may be realized.

The thermal propagation breakers may be positioned at appropriate positions and in appropriate numbers, depending on the capacity, use, etc. of the battery pack. According to an embodiment, the thermal propagation breakers may be arranged such that in a case where a thermal event occurs in a particular battery cell, the melting material of the thermal propagation breaker closest to the particular battery cell melt within a few seconds after the occurrence of the thermal event. For example, Table 2 below illustrates a case where a 7 mm thick thermal propagation breaker having 5 mm thick melting material was provided for every 12 battery cells. In Table 2 below, the number of insulating sheets used in calculating the total thickness of the insulating sheet of the present disclosure is equal to the number of battery cells minus one (i.e., the number of insulating sheets of a comparative structure) minus the number of thermal propagation breakers. For example, in a case where the number of battery cells is 12, 10 (i.e., 12-1-1=10) insulating sheets are used. For example, in a case where the number of battery cells is 24, 21 (i.e., 24-1-2=21) insulating sheets are used. The number of insulating sheets used in calculating the total thickness of the insulating sheet of the comparative structure is equal to the number of battery cells minus one. For example, in a case where the number of battery cells is 12, 11 (i.e., 12-1=1) insulating sheets are used. For example, in a case where the number of battery cells is 24, 23 (i.e., 24-1=23) insulating sheets are used.

**[Table 2]**

| Thermal Propagation Breakers (7mm) and Insulating Sheets (0.5mm) of Present Disclosure | | | | | Insulating Sheets (1.5 mm) of A Comparative Strcuture |
|---|---|---|---|---|---|
| Number of Battery Cells | Number of Thermal Propagation Breakers | Total Thickness of Thermal Propagation Breakers (mm) | Total Thickness of Insulating Sheets (mm) | Total Thickness (mm) | Total Thickness of Insulating Sheets (mm) |
| 12 | 1 | 7.0 | 5.0 | 12.0 | 16.5 |
| 24 | 2 | 14.0 | 10.5 | 24.5 | 34.5 |
| 36 | 3 | 21.0 | 16.0 | 37.0 | 52.5 |
| 48 | 4 | 28.0 | 21.5 | 49.5 | 70.5 |
| 60 | 5 | 35.0 | 27.0 | 62.0 | 88.5 |

According to the present disclosure, due to the high thermal propagation blocking effect of the thermal propagation breaker, an insulating sheet thinner than an insulating sheet of the comparative structure may be used. As a result, it can be seen that the total thickness of the internal compartment of the battery pack according to the present disclosure excluding the battery cells (the total thickness of the thermal propagation breaker and the insulating sheets) is reduced compared to the comparative structure (the total thickness of the insulating sheets). In other words, according to the present disclosure, a safe battery having high battery energy density may be realized.

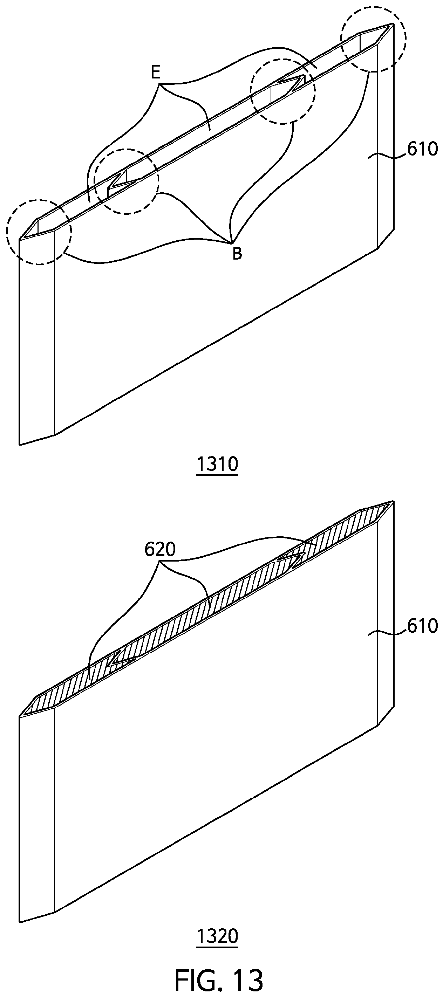

FIG. 13 illustrates a perspective diagram showing an example of a method of manufacturing a thermal propagation breaker according to embodiments of the present disclosure. According to an embodiment, a thermal propagation breaker may be manufactured using a thermal propagation breaker manufacturing apparatus in the processes of a first example 1310 and a second example 1320.

The first example 1310 illustrates an example where the frame 610 including bend portions B is manufactured. For example, the frame 610 may be manufactured by a mold injection method. For example, after a molten resin is injected into a mold and allowed to solidify, the frame 610 may be removed from the mold. The frame 610 may include (e.g., may be formed of) a plastic material.

The second example 1320 illustrates an example where the melting material 620 is injected into the frame 610. For example, after the manufactured frame 610 is fixed in a jig, a liquefied phase-change material may be injected into internal spaces E of the frame 610 and allowed to solidify. The solidified phase change material may be formed into the melting material 620. Thereafter, the thermal propagation breaker may be removed from the jig. In this process, a thermal propagation breaker may be manufactured.

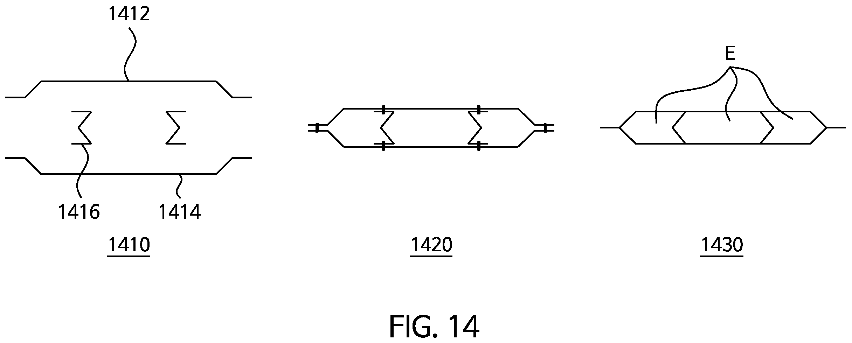

FIG. 14 illustrates a plan diagram showing an example of a method of manufacturing a thermal propagation breaker according to embodiments of the present disclosure. According to an embodiment, a frame of a thermal propagation breaker may be manufactured using a thermal propagation breaker manufacturing apparatus in the processes of first to third examples 1410, 1420, and 1430. In this example, the frame may include a metallic material.

The first example 1410 illustrates an example where parts are prepared. For example, a first part 1412, a second part 1414, and one or more third parts 1416 may be prepared. The first part 1412 to the third part 1416 may be prepared by applying a pressing process to metal plates (e.g., formed of aluminum or steel, etc.) having a flash thickness of 0.1 t to 0.3 t. The first part 1412 and the second part 1414 may be metal plates, with portions adjacent to opposite ends being bent. Each of the third parts 1416 may include a first joint, a second joint, and a connection between the two joints. The connection may be bent inwardly (toward the joints) or bent outwardly. Here, the bending may include curving and/or folding.

The second example 1420 illustrates an example where the respective parts are joined. Here, the joining may include welding or bonding. For example, the marked portions may be joined. For example, opposite ends of the first part 1412 may be joined to opposite ends of the second part 1414. In addition, first joints of the one or more third parts 1416 may be joined to the first part 1412 and second joints of the one or more third parts 1416 may be joined to the second part 1414.

The third example 1430 illustrates an example where the joining is completed. A central portion of the first part 1412 (i.e., a portion between the two ends) may form a first plate of the frame, and a central portion of the second part 1414 may form a second plate of the frame. The bend portions adjacent to the two ends of the first part 1412 and the second part 1414 and the connections of the third parts 1416 may form bend portions of the frame. In this process, a frame of a thermal propagation breaker may be manufactured.

A melting material may be formed by injecting a liquefied phase-change material into internal spaces E of the manufactured frame and solidifying the phase-change material. In this process, a thermal propagation breaker may be manufactured.

By way of summation and review, if a thermal runaway or a thermal event occurs in a particular rechargeable battery cell, causing the internal pressure of the rechargeable battery cell to exceed a critical range, a jet, e.g., a flame or gas, may be ejected through a vent. In this case, in response to the rapid propagation of a hot jet over the surrounding area, heat may propagate to the adjacent rechargeable battery cells, thereby causing a thermal runaway or a thermal event in the adjacent rechargeable battery cells.

In contrast, aspects of the present disclosure provide a thermal propagation breaker configured to block thermal propagation and a battery assembly including the same. That is, according to some embodiments of the present disclosure, in the case of a thermal event, the volumes of the internal spaces of the frame of the thermal propagation breaker may be reduced to obtain a space to accommodate the swelling of the battery cell. In other words, during the thermal event, the thermal propagation breaker can act as an air gap, and the thermal propagation time can be delayed. As a result, heat and/or fire generated inside the battery pack may be prevented from escaping outside the battery pack.

Further, according to some embodiments of the present disclosure, because the thermal propagation delaying/blocking effect occurs due to the gaps between the cells in the case of a thermal event, the thickness of each thermal insulating sheet positioned between battery cells may be reduced. As a result, a safe battery having high energy density may be realized.

These and other aspects and features of the present disclosure will be described in or will be apparent from the following description of embodiments of the present disclosure.

Although the present disclosure has been described with reference to embodiments and drawings illustrating aspects thereof, the present disclosure is not limited thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery assembly (1000, 2000), comprising:
a plurality of battery cells (100); and
a thermal propagation breaker (500, 600) between some battery cells among the plurality of battery cells (100) or on at least one outer battery cell among the plurality of battery cells (100), **characterised by** the thermal propagation breaker (500, 600) including:
a frame (510, 610) including bend portions (513, 514, 515_1, 515_2 613, 614, 615_1, 615_2) and defining an internal space, the bend portions (513, 514, 515, 613, 614, 615) being bendable in response to an external pressure, and a volume of the internal space being configured to decrease in response to bending of the bend portions (513, 514, 515_1, 515_2, 613, 614, 615_1, 615_2); and
a melting material (520, 620) filling the internal space, the melting material (520, 620) having a melting point at or above a first threshold temperature.

2. The battery assembly (1000, 2000) as claimed in claim 1, wherein:
the frame (510, 610) further includes a first plate (511, 611) and a second plate (512, 612) facing the first plate, and
the bend portions (513, 514, 515_1, 515_2, 613, 614, 615_1, 515_2) include a first bend portion (513, 613) connecting respective first ends of the first plate (511, 611) and the second plate (512, 612), and a second bend portion (514, 614) connecting respective second ends of the first plate (511, 611) and the second plate (512, 612), and each of the first bend portion (513, 613) and the second bend portion (514, 614) having a bent shape.

3. The battery assembly (1000, 2000) as claimed in claim 2, wherein the bend portions (513, 514, 515_1, 515_2, 613, 614, 615_1, 615_2) further include one or more third bend portions (515_1, 515_2, 615_1, 615_2) connecting the first plate (511, 611) and the second plate (512, 612), the one or more third bend portions (515_1, 515_2, 615_1, 615_2) having a bent shape and being between the first bend portion (513, 613) and the second bend portion (514, 614).

4. The battery assembly (1000, 2000) as claimed in one of claims 2 or 3, wherein at or above the first threshold temperature, in response to the external pressure applied to the thermal propagation breaker (500, 600) in a direction perpendicular to the first plate (511, 611) and the second plate (512, 612), the bend portions (513, 514, 515, 613, 614, 615) are configured to bend and a distance between the first plate (511, 611) and the second plate (512, 612) is configured to decrease.

5. The battery assembly (1000, 2000) as claimed in one of the preceding claims, wherein the frame (510, 610) includes at least one side that is open.

6. The battery assembly (1000, 2000) as claimed in one of the preceding claims, wherein the frame (510, 610) has a melting point at or above a second threshold temperature, the second threshold temperature being higher than the first threshold temperature.

7. The battery assembly (1000, 2000) as claimed in claim 6, wherein at or above the second threshold temperature, a melting time for the melting material (520, 620) is shorter than a melting time for the frame (510, 610).

8. The battery assembly (1000, 2000) as claimed in one of the preceding claims, wherein the first threshold temperature is between 60 °C and 90 °C.

9. The battery assembly (1000, 2000) as claimed in one of the preceding claims, wherein the melting material includes paraffin or polycaprolactone.

10. The battery assembly (1000, 2000) as claimed in one of the preceding claims, wherein the frame (510, 610) includes a metal or a plastic.

11. The battery assembly (1000, 2000) as claimed in one of the preceding claims, wherein the frame (510, 610) has a thickness in Y-axis direction of 5 to 10 mm and the melting material (520, 620) having a thickness in Y-axis direction of 3 to 8 mm.

12. The battery assembly (1000, 2000) as claimed in one of the preceding claims, further including at least one insulating sheet (400).

13. A thermal propagation breaker (500, 600) for a battery assembly **characterised by** the thermal propagation breaker (500, 600) further including:
a frame (510, 610) including bend portions (513, 514, 515_1, 515_2 613, 614, 615_1, 615_2) and defining an internal space, the bend portions (513, 514, 515, 613, 614, 615) being bendable in response to an external pressure, and a volume of the internal space being configured to decrease in response to bending of the bend portions (513, 514, 515_1, 515_2, 613, 614, 615_1, 615_2); and
a melting material (520, 620) filling the internal space, the melting material (520, 620) having a melting point at or above a first threshold temperature.

14. The thermal propagation breaker (500, 600) as claimed in claim 13, wherein:
the frame (510, 610) further includes a first plate (511, 611) and a second plate (512, 612) facing the first plate, and
the bend portions (513, 514, 515_1, 515_2, 613, 614, 615_1, 515_2) include a first bend portion (513, 613) connecting respective first ends of the first plate (511, 611) and the second plate (512, 612), and a second bend portion (514, 614) connecting respective second ends of the first plate (511, 611) and the second plate (512, 612), and each of the first bend portion (513, 613) and the second bend portion (514, 614) having a bent shape.

15. The thermal propagation breaker (500, 600) as claimed in one of claims 13 or 14, wherein the first threshold temperature is between 60 °C and 90 °C.

## Patentansprüche

1. Batterieanordnung (1000, 2000), umfassend:
eine Vielzahl von Batteriezellen (100); und
einen Wärmeausbreitungsbrecher (500, 600) zwischen einigen Batteriezellen der Vielzahl von Batteriezellen (100) oder an zumindest einer äußeren Batteriezelle der Vielzahl von Batteriezellen (100),
**dadurch gekennzeichnet, dass** der Wärmeausbreitungsbrecher (500, 600) aufweist:
einen Rahmen (510, 610), der Biegeabschnitte (513, 514, 515_1, 515_2, 613, 614, 615_1, 515_2) aufweist und einen Innenraum definiert, wobei die Biegeabschnitte (513, 514, 515, 613, 614, 615) in Reaktion auf einen äußeren Druck biegbar sind und ein Volumen des Innenraums dazu eingerichtet ist, in Reaktion auf Biegen der Biegeabschnitte (513, 514, 515_1, 515_2, 613, 614, 615_1, 615_2) abzunehmen; und
ein Schmelzmaterial (520, 620), das den Innenraum ausfüllt, wobei das Schmelzmaterial (520, 620) einen Schmelzpunkt bei oder oberhalb einer ersten Schwellentemperatur aufweist.

2. Batterieanordnung (1000, 2000) nach Anspruch 1, wobei:
der Rahmen (510, 610) ferner eine erste Platte (511, 611) und eine der ersten Platte zugewandte zweite Platte (512, 612) aufweist, und
die Biegeabschnitte (513, 514, 515_1, 515_2, 613, 614, 615_1, 615_2) einen ersten Biegeabschnitt (513, 613), der jeweilige erste Enden der ersten Platte (511, 611) und der zweiten Platte (512, 612) verbindet, und einen zweiten Biegeabschnitt (514, 614), der jeweilige zweite Enden der ersten Platte (511, 611) und der zweiten Platte (512, 612) verbindet, aufweisen, und der erste Biegeabschnitt (513, 613) und der zweite Biegeabschnitt (514, 614) jeweils eine gebogene Form aufweisen.

3. Batterieanordnung (1000, 2000) nach Anspruch 2, wobei die Biegeabschnitte (513, 514, 515_1, 515_2, 613, 614, 615_1, 615_2) ferner einen oder mehrere dritte Biegeabschnitte (515_1, 515_2, 615_1, 615_2) aufweisen, die die erste Platte (511, 611) und die zweite Platte (512, 612) verbinden, wobei die eine oder mehreren dritten Biegeabschnitte (515_1, 515_2, 615_1, 615_2) eine gebogene Form aufweisen und sich zwischen dem ersten Biegeabschnitt (513, 613) und dem zweiten Biegeabschnitt (514, 614) befinden.

4. Batterieanordnung (1000, 2000) nach einem der Ansprüche 2 oder 3, wobei bei oder oberhalb der ersten Schwellentemperatur in Reaktion auf den auf den Wärmeausbreitungsbrecher (500, 600) in einer Richtung senkrecht zu der ersten Platte (511, 611) und der zweiten Platte (512, 612) ausgeübten äußeren Druck die Biegeabschnitte (513, 514, 515, 613, 614, 615) dazu eingerichtet sind, sich zu biegen, und ein Abstand zwischen der ersten Platte (511, 611) und der zweiten Platte (512, 612) dazu eingerichtet ist, abzunehmen.

5. Batterieanordnung (1000, 2000) nach einem der vorhergehenden Ansprüche, wobei der Rahmen (510, 610) zumindest eine offene Seite aufweist.

6. Batterieanordnung (1000, 2000) nach einem der vorhergehenden Ansprüche, wobei der Rahmen (510, 610) einen Schmelzpunkt bei oder oberhalb einer zweiten Schwellentemperatur aufweist, wobei die zweite Schwellentemperatur höher ist als die erste Schwellentemperatur.

7. Batterieanordnung (1000, 2000) nach Anspruch 6, wobei bei oder oberhalb der zweiten Schwellentemperatur eine Schmelzzeit für das Schmelzmaterial (520, 620) kürzer ist als eine Schmelzzeit für den Rahmen (510, 610).

8. Batterieanordnung (1000, 2000) nach einem der vorhergehenden Ansprüche, wobei die erste Schwellentemperatur zwischen 60 °C und 90 °C liegt.

9. Batterieanordnung (1000, 2000) nach einem der vorhergehenden Ansprüche, wobei das Schmelzmaterial Paraffin oder Polycaprolacton aufweist.

10. Batterieanordnung (1000, 2000) nach einem der vorhergehenden Ansprüche, wobei der Rahmen (510, 610) ein Metall oder einen Kunststoff aufweist.

11. Batterieanordnung (1000, 2000) nach einem der vorhergehenden Ansprüche, wobei der Rahmen (510, 610) eine Dicke in Y-Achsen-Richtung von 5 bis 10 mm aufweist und das Schmelzmaterial (520, 620) eine Dicke in Y-Achsen-Richtung von 3 bis 8 mm aufweist.

12. Batterieanordnung (1000, 2000) nach einem der vorhergehenden Ansprüche, ferner umfassend zumindest eine Isolierfolie (400).

13. Wärmeausbreitungsbrecher (500, 600) für eine Batterieanordnung, **dadurch gekennzeichnet, dass** der Wärmeausbreitungsbrecher (500, 600) ferner aufweist:
einen Rahmen (510, 610), der Biegeabschnitte (513, 514, 515_1, 515_2, 613, 614, 615_1, 615_2) aufweist und einen Innenraum definiert, wobei die Biegeabschnitte (513, 514, 515, 613, 614, 615) in Reaktion auf einen äußeren Druck biegbar sind und ein Volumen des Innenraums dazu eingerichtet ist, in Reaktion auf Biegen der Biegeabschnitte (513, 514, 515_1, 515_2, 613, 614, 615_1, 615_2) abzunehmen; und
ein Schmelzmaterial (520, 620), das den Innenraum ausfüllt, wobei das Schmelzmaterial (520, 620) einen Schmelzpunkt bei oder oberhalb einer ersten Schwellentemperatur aufweist.

14. Wärmeausbreitungsbrecher (500, 600) nach Anspruch 13, wobei:
der Rahmen (510, 610) ferner eine erste Platte (511, 611) und eine der ersten Platte zugewandte zweite Platte (512, 612) aufweist, und
die Biegeabschnitte (513, 514, 515_1, 515_2, 613, 614, 615_1, 515_2) einen ersten Biegeabschnitt (513, 613), der jeweilige erste Enden der ersten Platte (511, 611) und der zweiten Platte (512, 612) verbindet, und einen zweiten Biegeabschnitt (514, 614), der jeweilige zweite Enden der ersten Platte (511, 611) und der zweiten Platte (512, 612) verbindet, aufweisen, und der erste Biegeabschnitt (513, 613) und der zweite Biegeabschnitt (514, 614) jeweils eine gebogene Form aufweisen.

15. Wärmeausbreitungsbrecher (500, 600) nach einem der Ansprüche 13 oder 14, wobei die erste Schwellentemperatur zwischen 60 °C und 90 °C liegt.

## Revendications

1. Ensemble batterie (1000, 2000), comportant :
une pluralité d'éléments de batterie (100) ; et
un disjoncteur à propagation thermique (500, 600) entre certains éléments de batterie parmi la pluralité d'éléments de batterie (100) ou sur au moins un élément de batterie externe parmi la pluralité d'éléments de batterie (100), **caractérisé par le fait que** le disjoncteur à propagation thermique (500, 600) inclut :
un cadre (510, 610) incluant des parties de courbure (513, 514, 515_1, 515_2, 613, 614, 615_1, 615_2) et définissant un espace interne, les parties de courbure (513, 514, 515, 613, 614, 615) pouvant être courbées en réponse à une pression externe, et un volume de l'espace interne étant configuré pour diminuer en réponse au fait de courber les parties de courbure (513, 514, 515_1, 515_2, 613, 614, 615_1, 615_2) ; et
un matériau de fusion (520, 620) remplissant l'espace interne, le matériau de fusion (520, 620) présentant un point de fusion à ou au-dessus d'une première température seuil.

2. Ensemble batterie (1000, 2000) selon la revendication 1, dans lequel :
le cadre (510, 610) inclut en outre une première plaque (511, 611) et une deuxième plaque (512, 612) faisant face à la première plaque, et
les parties de courbure (513, 514, 515_1, 515_2, 613, 614, 615_1, 515_2) incluent une première partie de courbure (513, 613) reliant de premières extrémités respectives de la première plaque (511, 611) et de la deuxième plaque (512, 612), et une deuxième partie de courbure (514, 614) reliant de deuxièmes extrémités respectives de la première plaque (511, 611) et de la deuxième plaque (512, 612), et chacune parmi la première partie de courbure (513, 613) et la deuxième partie de courbure (514, 614) présentant une forme courbée.

3. Ensemble batterie (1000, 2000) selon la revendication 2, dans lequel les parties de courbure (513, 514, 515_1, 515_2, 613, 614, 615_1, 615_2) incluent en outre une ou plusieurs troisièmes parties de courbure (515_1, 515_2, 615_1, 615_2) reliant la première plaque (511, 611) et la deuxième plaque (512, 612), les une ou plusieurs troisièmes parties de courbure (515_1, 515_2, 615_1, 615_2) présentant une forme courbée et se trouvant entre la première partie de courbure (513, 613) et la deuxième partie de courbure (514, 614).

4. Ensemble batterie (1000, 2000) selon l'une des revendications 2 ou 3, dans lequel à ou au-dessus de la première température seuil, en réponse à la pression externe appliquée au disjoncteur à propagation thermique (500, 600) dans une direction perpendiculaire à la première plaque (511, 611) et à la deuxième plaque (512, 612), les parties de courbure (513, 514, 515, 613, 614, 615) sont configurées pour se courber et une distance entre la première plaque (511, 611) et la deuxième plaque (512, 612) est configurée pour diminuer.

5. Ensemble batterie (1000, 2000) selon l'une des revendications précédentes, dans lequel le cadre (510, 610) comporte au moins un côté ouvert.

6. Ensemble batterie (1000, 2000) selon l'une des revendications précédentes, dans lequel le cadre (510, 610) présente un point de fusion à ou au-dessus d'une deuxième température seuil, la deuxième température seuil étant supérieure à la première température seuil.

7. Ensemble batterie (1000, 2000) selon la revendication 6, dans lequel, à la deuxième température seuil ou au-dessus de celle-ci, un temps de fusion pour le matériau de fusion (520, 620) est plus court qu'un temps de fusion pour le cadre (510, 610).

8. Ensemble batterie (1000, 2000) selon l'une des revendications précédentes, dans lequel la première température seuil est comprise entre 60 °C et 90 °C.

9. Ensemble batterie (1000, 2000) selon l'une des revendications précédentes, dans lequel le matériau de fusion inclut de la paraffine ou de la polycaprolactone.

10. Ensemble batterie (1000, 2000) selon l'une des revendications précédentes, dans lequel le cadre (510, 610) comporte un métal ou un plastique.

11. Ensemble batterie (1000, 2000) selon l'une des revendications précédentes, dans lequel le cadre (510, 610) présente une épaisseur dans la direction de l'axe Y de 5 à 10 mm et le matériau de fusion (520, 620) présente une épaisseur dans la direction de l'axe Y de 3 à 8 mm.

12. Ensemble batterie (1000, 2000) selon l'une des revendications précédentes, incluant en outre au moins une feuille isolante (400).

13. Disjoncteur à propagation thermique (500, 600) pour un ensemble batterie **caractérisé par le fait que** le disjoncteur à propagation thermique (500, 600) inclut en outre :
un cadre (510, 610) incluant des parties de courbure (513, 514, 515_1, 515_2, 613, 614, 615_1, 615_2) et définissant un espace interne, les parties de courbure (513, 514, 515, 613, 614, 615) pouvant être courbées en réponse à une pression externe, et un volume de l'espace interne étant configuré pour diminuer en réponse au fait de courber les parties de courbure (513, 514, 515_1, 515_2, 613, 614, 615_1, 615_2) ; et
un matériau de fusion (520, 620) remplissant l'espace interne, le matériau de fusion (520, 620) présentant un point de fusion à ou au-dessus d'une première température seuil.

14. Disjoncteur à propagation thermique (500, 600) selon la revendication 13, dans lequel :
le cadre (510, 610) inclut en outre une première plaque (511, 611) et une deuxième plaque (512, 612) faisant face à la première plaque, et
les parties de courbure (513, 514, 515_1, 515_2, 613, 614, 615_1, 515_2) incluent une première partie de courbure (513, 613) reliant de premières extrémités respectives de la première plaque (511, 611) et de la deuxième plaque (512, 612), et une deuxième partie de courbure (514, 614) reliant de deuxièmes extrémités respectives de la première plaque (511, 611) et de la deuxième plaque (512, 612), et chacune parmi la première partie de courbure (513, 613) et la deuxième partie de courbure (514, 614) présentant une forme courbée.

15. Disjoncteur à propagation thermique (500, 600) selon l'une des revendications 13 ou 14, dans lequel la première température seuil est comprise entre 60 °C et 90 °C.
